# EUROPÄISCHE PATENTSCHRIFT

(11) **EP 2 531 742 B1**
(45) Veröffentlichungstag und Bekanntmachung des Hinweises auf die Patenterteilung: **03.12.2014**
(21) Anmeldenummer: 11701998.4
(22) Anmeldetag: 27.01.2011
(51) Int. Cl.: F16D 55/224

(54) **DRUCKSTANGENSTELLER FÜR KOMPAKT-BREMSZANGENEINHEITEN MIT GEGEN EINEN ELASTISCHEN ANSCHLAG ANSCHLAGBAREM STELLHEBEL**
PLUNGER ROD ADJUSTER FOR COMPACT BRAKE CALIPER UNITS, HAVING AN ADJUSTING LEVER THAT ABUTS ON AN ELASTIC STOP
ACTIONNEUR À TIGE DE PRESSION POUR DES UNITÉS D'ÉTRIER DE FREIN COMPACTES AVEC LEVIER D'ACTIONNEMENT SE DÉPLAÇANT EN BUTÉE CONTRE UNE BUTÉE ÉLASTIQUE

(30) Priorität: 02.02.2010 DE 102010006748
(43) Veröffentlichungstag der Anmeldung: 12.12.2012
(73) Patentinhaber: KNORR-BREMSE Systeme für Schienenfahrzeuge GmbH, 80809 München (DE)
(72) Erfinder: EBNER, Christian, 86161 Augsburg (DE); LEHNEIS, Michael, 81669 München (DE); RODRIGUEZ, Diego, 81375 München (DE)
(74) Vertreter: Mattusch, Gundula
(86) Internationale Anmeldenummer: PCT/EP2011/051099
(87) Internationale Veröffentlichungsnummer: WO 2011/095424

(56) Entgegenhaltungen:
- EP-A1- 0 121 815
- EP-A2- 0 699 846
- EP-A2- 0 732 247
- WO-A1-03/082651

## Beschreibung

### Stand der Technik

Die Erfindung betrifft eine Scheibenbremse eines Schienenfahrzeugs, mit einer Bremszange, deren beide Zangenhebel an ihren einen Enden mit Bremsbacken und anderendseitig mit einem Verschleißnachsteller gekoppelt sind, wobei die Länge des Verschleißnachstellers abhängig vom Hub eines Bremskraftmotors über einen Steuermechanismus einstellbar ist, welcher mit einer Steuerstange auf ein Stellelement des Verschleißnachstellers wirkt, wobei das Stellelement mit einem Freilauf in einem Gehäuse des Verschleißnachstellers gelagert und in einer nachstellungsfreien Ausgangsstellung mit einem Anschlagabschnitt gegen einen Anschlag des Gehäuses durch wenigstens ein Rückstellfederelement belastet ist, gemäß dem Oberbegriff von Anspruch 1.

In Kompakt-Bremszangeneinheiten von Schienenfahrzeugen wird der Verschleiß der Bremsbeläge und der Bremsscheibe durch Verlängerung bzw. Verkürzung eines Druck- oder Zugstangenstellers automatisch ausgeglichen. Die Verlängerung bzw. Verkürzung des Stellers erfolgt mittels eines Schraubgetriebes als Mutter-Spindel-System. Um eine möglichst große Nachstellung pro Betätigung zu erreichen, wird das Gewinde mit einer sehr großen Steigung ausgeführt. Das Gewinde ist deshalb nicht selbsthemmend. Während das eine Schraubgetriebeteil drehfest gehalten ist, z.B. die Mutter, ist das andere Schraubgetriebeteil, z.B. die Spindel drehbar gelagert. Mittels eines Ansteuermechanismus wird ein Stellhebel mit Freilauf (z.B. Hülsenfreilauf) verdreht, welcher wiederum die Spindel oder die Mutter des Druckstangenstellers so dreht, dass sich der Steller z.B. verlängert. Der Nachstellvorgang ist beendet, wenn der Stellhebel an einem Anschlag im Stellergehäuse anschlägt oder wenn sich im Steller, z.B. wenn die Beläge auf der Bremsscheibe zur Anlage kommen, eine Axialkraft aufbaut, welche der Ansteuermechanismus des Stellers nicht mehr überwinden kann. Ein solcher Ansteuermechanismus ist beispielsweise in der gattungsgemäßen EP 0 732 247 B1 beschrieben.

In der nach Fig.2 der EP 0 732 247 B1 ausgeführten Version eines Druckstangenstellers ist die Mutter gegen Verdrehen im Joch gesichert und die Spindel drehbar in einem Führungsrohr des Stellergehäuses angeordnet. Zum Nachstellen wird der Stellhebel über eine Druckstange mit Kugelkopf, welche in eine Kalotte des Stellhebels eingreift, betätigt. Über den im Stellhebel eingepressten Hülsenfreilauf wird die Spindel mitgedreht. Dabei rutscht der Schlingfedernfreilauf in Freilaufrichtung durch. Gibt die Druckstange beim Lösen der Bremse den Stellhebel wieder frei, so wird dieser durch eine Rückstellfeder wieder in seine Ausgangsstellung zurückgedreht, in welcher er gegen einen starren Anschlag des Stellergehäuses anschlägt. Der Hülsenfreilauf dreht sich dabei in Freilaufrichtung durch, dabei wird die Spindel durch die Schlingfeder am Mitdrehen gehindert.

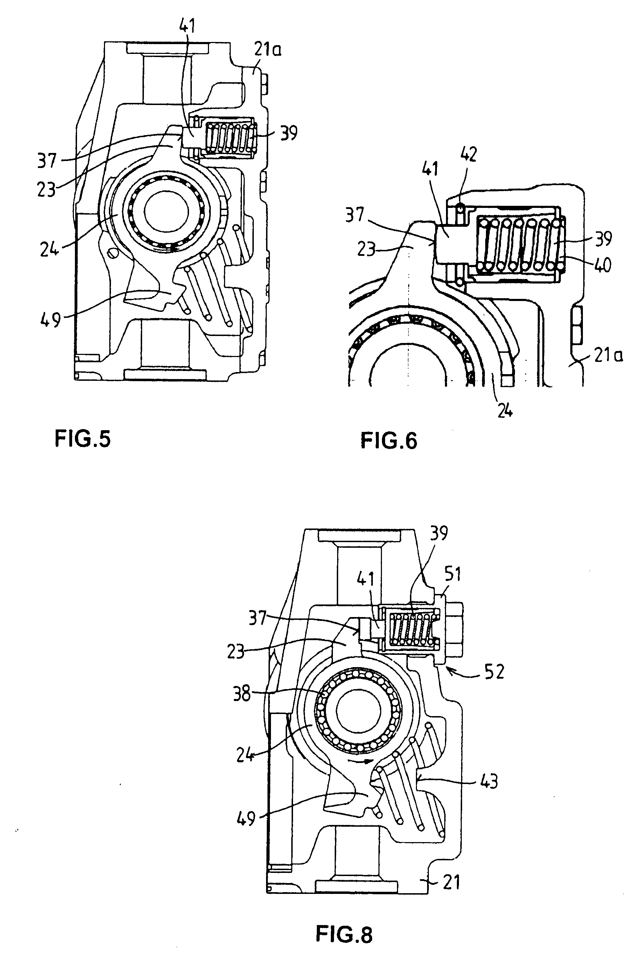

Die EP 0 699 846 B1 beschreibt ebenfalls eine Scheibenbremse für Schienenfahrzeuge mit einer Bremszange und Verschleißnachsteller. In der dort beschriebenen Ausführung als Druckstangensteller wird das Stellelement durch eine Stellhülse mit Außenverzahnung gebildet (Position 61 in Fig.5 und 6). In diese Stellhülse ist ein Hülsenfreilauf eingepresst. Mit der Verzahnung der Stellhülse im Eingriff steht ein Zahnradsegment, über das mittels eines Hebels die Stellhülse gegen die Kraft einer Rückholfeder gedreht werden kann. Über den Hülsenfreilauf wird die Mutter mitgenommen, wodurch sich der Druckstangensteller verlängert. Die Spindel ist drehfest im Stellerjoch gelagert. Die Rückholfeder dreht die Stellhülse und damit auch das Zahnradsegment in die Ausgangsstellung, dabei schlägt das Zahnradsegment gegen einen starren Anschlag am Stellergehäuse.

Bei einem Druckstangensteller wird eine Drehung z.B. der Spindel des SpindelMutter-Getriebes in den Druckstangensteller verkürzender Richtung durch einen Schlingfedernfreilauf zwischen Spindel und Stellergehäuse verhindert. Dieser Schlingfederfreilauf bildet neben dem Freilauf des Stellelements einen weiteren oder zweiten Freilauf. Durch den Schlingfederfreilauf wird die Spindel in ihrer Position gehalten, wenn das Stellelement durch die Kraft seiner Rückholfeder in seine Ausgangsstellung zurück gedreht wird bzw. wenn bei einer Bremsung eine hohe Zuspannkraft auf den Steller und damit ein großes Drehmoment auf die Spindel wirkt. Wird ein solcher Schlingfederfreilauf durch ein Moment belastet, so erfährt er eine elastische Verformung, welche zum einen aus einer dehnenden Verlängerung des Federdrahtes und zum anderen aus einer schlingenden Ausrichtung der Windungen auf den zu kuppelnden Teilen, z.B. Spindel und Stellergehäuse resultiert. Unter extremen Einsatzbedingungen können von außen eingeleitete Schwingungen eine Erhöhung der elastischen Dehnung bewirken, indem sie lokal unter einzelnen Windungen den Reibwert reduzieren und dadurch mehr Windungen an der Drehmomentübertragung beteiligt sind. Weist der Schlingfedernfreilauf unter Last eine zu große elastische Verformung bzw. Dehnung in Sperrrichtung auf, so muss das im Schraubgetriebe wirkende Drehmoment teilweise oder gar vollständig über den Hülsenfreilauf des Stellelements abgestützt werden, wenn sich das Stellelement in seiner Ausgangsstellung am Anschlag des Stellergehäuses befindet. Eine Beschädigung des Hülsenfreilaufes des Stellelements und damit eine Beeinträchtigung der Funktion des Verschleißnachstellers kann dann nicht ausgeschlossen werden.

Die Aufgabe der Erfindung besteht demgegenüber darin, bei einer Scheibenbremse der eingangs genannten Art eine Überlastung des Verschleißnachstellers zu verhindern.

### Offenbarung der Erfindung

Eine Überlastung des Freilaufes des Stellelements kann verhindert werden, wenn der Anschlag für das sich in seiner Ausgangsstellung befindliche Stellelement wenigstens ein in Anschlagrichtung elastisches Element beinhaltet. Dann kann der Anschlag bei einem zu hohen Drehmoment ausweichen.

Hierdurch ergibt sich der Vorteil, dass der Freilauf des Stellelements bei extremen Einsatzbedingungen mit hoher Schwingungsbelastung besser gegen Überlastung geschützt ist. Weiterhin können die Anforderungen an die Fertigungsgenauigkeit des weiteren oder zweiten Freilaufs z.B. in Form eines der Schlingfederfreilaufs reduziert werden, denn dann darf sich dieser bei hoher Beanspruchung stärker verformen, was sich günstig auf die Kosten auswirkt.

Das Stellelement nimmt die nachstellungsfreie Ausgangsstellung, in welche es durch das Rückstellfederelement belastet ist, beispielsweise bei einer Lösestellung der Bremse oder bei einer Zuspannstellung der Bremse ein, wenn kein Nachstellungsbedarf durch den Verschleißnachsteller vorliegt.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt ist das wenigstens eine elastische Element vorgespannt, wobei die Vorspannkraft des elastischen Elements größer als die Kraft des wenigstens einen, das Stellelement gegen den Anschlag belastenden Rückstellfederelements ist.

Bei großer elastischer Verformung der Schlingfeder des Schlingfederfreilaufs wird das vorgespannte elastische Element, z.B. eine Druckfeder überdrückt. Das auf das Stellelement und damit auf den Hülsenfreilauf wirkende Moment wird dann begrenzt auf das Moment, welches durch die durch das elastische Element ausgeübte Kraft, z.B. eine Federkraft eingeleitet wird.

Im Stellergehäuse wird als elastisches Element vorzugsweise wenigstens eine vorgespannte Druckfeder so positioniert, dass das Stellelement auf ihr zur Anlage kommt, wenn es durch die Kraft des Rückstellfederelements in seine Ausgangsposition gedreht wird. Da die Vorspannkraft der vorgespannten Druckfeder größer als die Kraft der Rückstellfeder ist, wird eine definierte Ausgangsposition des Stellelements gewährleistet. Zum anderen ist die Vorspannkraft des wenigstens einen elastischen Elements nur so groß, dass das Moment, welches auf den Freilauf des Stellelements wirkt, wenn das wenigstens eine elastische Element durch das Stellelement belastet wird, kleiner als das vom Freilauf des Stellelements tolerierbare Moment ist.

Aus diesen Gründen wird vorzugsweise das wenigstens eine elastische Element elastisch verformt, wenn die durch das Stellelement wirkende Kraft größer als eine vorgegebene Grenzkraft ist, wobei andernfalls im wesentlichen keine elastische Verformung des wenigstens einen elastischen Elements stattfindet.

Zur Realisierung kann die wenigstens eine Druckfeder in einer Gehäuseausnehmung des Stellergehäuses des Verschleißnachstellers aufgenommen und dort mit beiden Enden vorgespannt abgestützt sein, wobei die wenigstens eine Druckfeder das Stellelement über ein Druckstück kontaktiert, welches in der Gehäuseausnehmung verschieblich gelagert ist.

Insbesondere ist dabei das wenigstens eine elastische Element, also vorzugsweise eine Druckfeder im Inneren einer Hohlschraube gehalten, welche von außen her in eine Durchgangsbohrung des Stellerdgehäuses eingeschraubt ist. Dann kann ein solcher elastischer Anschlag auf einfache Weise in einem bereits bestehenden Verschleißnachsteller nachgerüstet werden, indem eine Gewindebohrung im Stellergehäuse des Verschleißnachstellers gefertigt und die Hohlschraube mit der vorgespannten Druckfeder und dem Druckstück in die Gewindebohrung eingeschraubt wird.

Zusätzlich zu dem der Ausgangsstellung des Stellelements zugeordneten und mit einem elastischen Element versehenen Anschlag existiert ein weiterer Anschlag im Stellergehäuse des Verschleißnachstellers, gegen welchen das Stellelement mit einem weiteren Anschlagabschnitt anschlägt, wenn der Verschleißnachsteller einen maximalen Nachstellweg nachstellt.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine Draufsicht auf eine Scheibenbremse eines Schienenfahrzeugs mit einem Druckstangensteller einer Bremszange als Verschleißnachsteller gemäß einer bevorzugten Ausführungsform der Erfindung;
- Fig.2: eine teilweise aufgeschnittene Ansicht der Bremszange von Fig.1;
- Fig.3: eine Querschnittsdarstellung des Druckstangenstellers der Scheibenbremse von Fig.1;
- Fig.4: eine Querschnittsdarstellung entlang der Linie IV-IV von Fig.3, welche ein mit einem Hülsenfreilauf in einem Stellergehäuse gelagertes Stellelement in seiner Ausgangsstellung zeigt;
- Fig.5: das Stellelement von Fig.4 in einer über die Ausgangsstellung hinaus belasteten Stellung;
- Fig.6: einen vergrößerten Ausschnitt aus Fig.5;
- Fig.7: das Stellelement von Fig.4 in einer Stellung, welche einem maximalen Nachstellweg des Druckstangenstellers von Fig.3 entspricht;
- Fig.8: eine Querschnittsdarstellung einer weiteren Ausführungsform eines Druckstangenstellers.

### Beschreibung der Ausführungsbeispiele

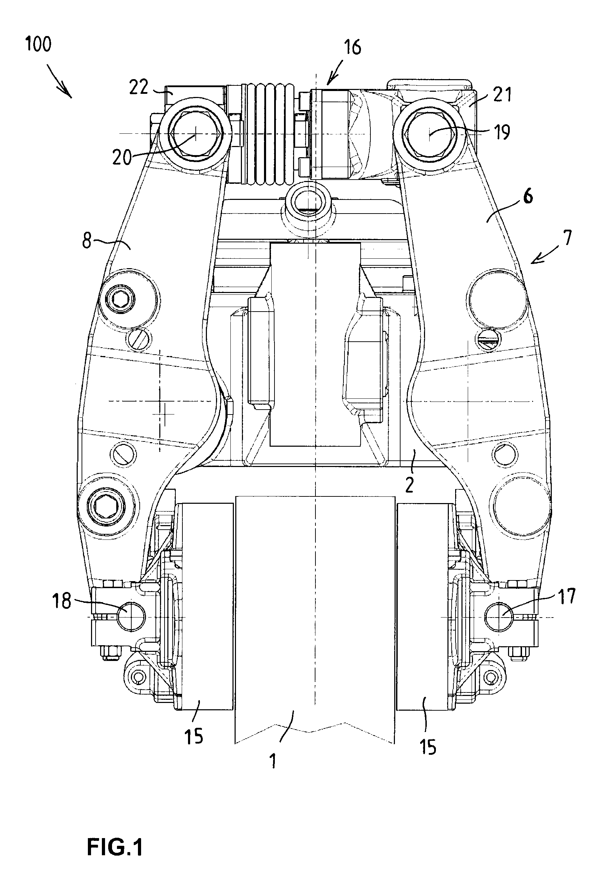

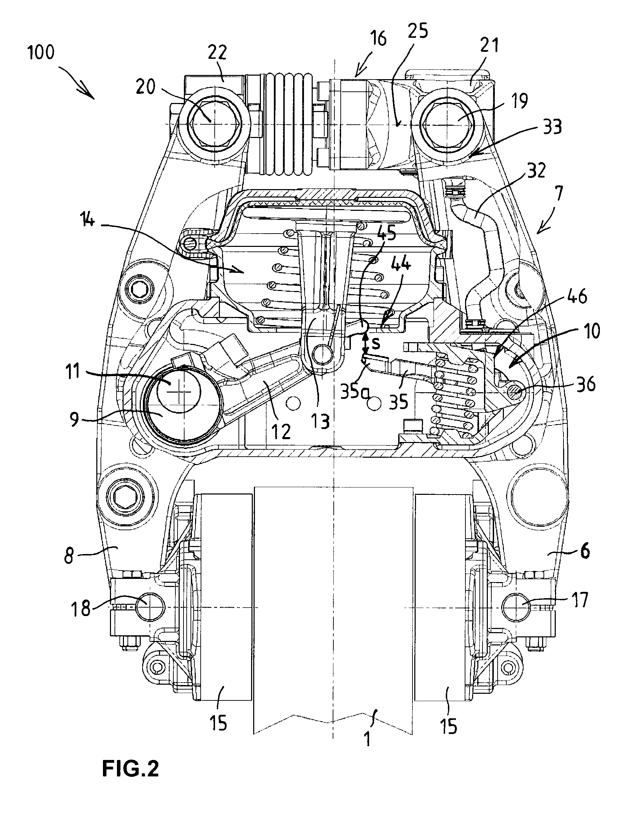

Fig.1 und Fig.2 zeigen eine Scheibenbremse 100 für insbesondere querverschiebliche Radsätze von Schienenfahrzeugen, mit einer exzentrisch angetriebenen Bremszange 7, deren beide Zangenhebel 6, 8 an ihren einen Enden mit Bremsbacken 15 und in ihren mittleren Bereichen mit einem Bremskraftmotor 14 gekoppelt sind. Die Bremsscheibe 1 ist als Achsscheibe nur teilweise dargestellt.

An einem Bremsengehäuse 2 sind in einer als raumfest gehalten anzusehenden Koppelstelle 10 ein Zangenhebel 6 einer Bremszange 7 um eine Drehachse drehbar angekoppelt. Der andersseitige Zangenhebel 8 ist in einer Koppelstelle 10 mittels eines Bolzens 9 am Bremsengehäuse 2 drehbar angekoppelt, der Bolzen 9 ist dabei um eine zur Drehachse des Zangenhebels 6 parallele Drehachse drehbar am Bremsengehäuse 2 gelagert und trägt exzentrisch achsparallele Bolzenfortsätze 11, auf welchen der Zangenhebel 8 gelagert ist.

Vom Bolzen 9 kragt ein Dreharm 12 aus, an dessen Ende die Kolbenstange eines Bremszylinders als Kraftabgabeorgan 13 eines Bremskraftmotors 14 angelenkt ist. Die beiden Zangenhebel 6 und 8 sind an ihren einen Enden mit an die Bremsscheibe 1 anpressbaren Bremsbacken 15 und an ihren anderen Enden mit einem sie verbindenden Verschleißnachsteller 16, im Ausführungsbeispiel ein Druckstangensteller drehbar in Koppelstellen 17, 18, 19 und 20 gekoppelt. Der Druckstangensteller 16 bzw. sein Stellergehäuse ist zu seiner Ankopplung mit sich jeweils zwischen den beiden Wangen 4 und 5 der Zangenhebel 6 und 8 erstreckenden Lagerteilen 21 und 22 versehen.

Beim Druckmittelbeaufschlagen des beispielsweise pneumatischen Bremskraftmotors 14 dreht dessen Kraftabgabeorgan 13 den Drehhebel 12, wodurch infolge der exzentrischen Anordnung der Bolzenfortsätze 11 der Zangenhebel 8 um seine Koppelstelle 20 zum Druckstangensteller 16 in Andrückrichtung seiner Bremsbacke 15 an die Bremsscheibe 1 gedreht wird. Der Aufbau und die Funktionsweise der Exzenter-Zuspannung der Bremszange 7 entspricht damit derjenigen nach der bereits erwähnten EP 0 732 247 A2. Nach Anlegen der dem Zangenhebel 8 zugeordnete Bremsbacke 15 an die Bremsscheibe 1 dreht sich der Zangenhebel 8 um seine Koppelstelle 18 zu dieser Bremsbacke 15, wobei über die Koppelstelle 20, die Stange 16 und die Koppelstelle 19 der Zangenhebel 6 um die Koppelstelle 10 zum Anlegen seiner Bremsbacke 15 an die Bremsscheibe 1 gedreht wird.

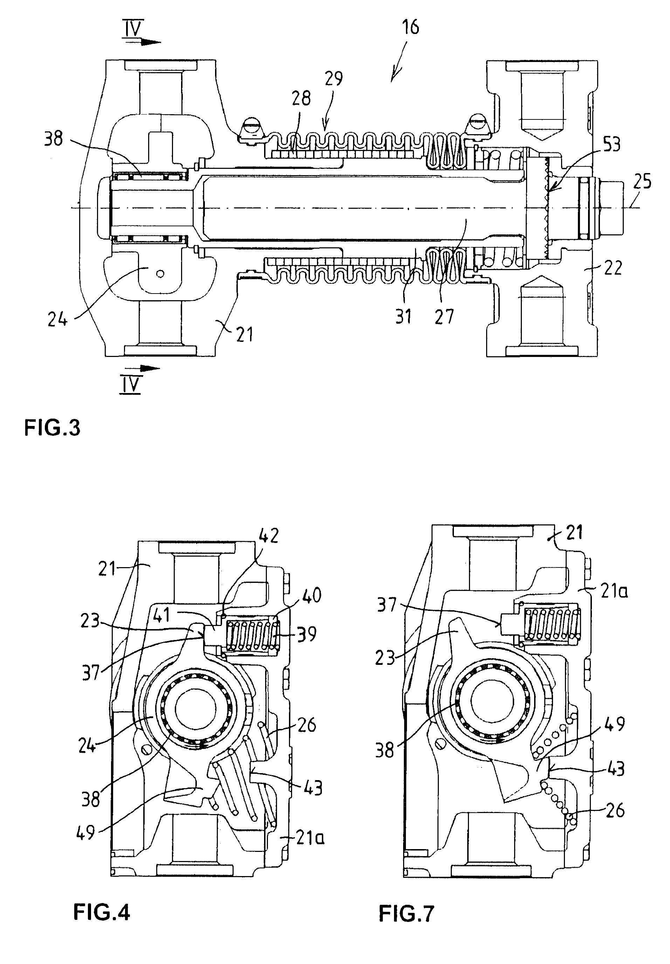

Der Druckstangensteller 16 vergrößert entsprechend dem Verschleiß der Bremsbacken 15 seine Länge. Hierzu weist er einen Stellhebel 24 auf, der am dem Zangenhebel 6 zugeordneten Lagerteil 21 um eine Längsachse 25 des Druckstangenstellers 16 drehbar gelagert ist. Ein zapfenförmiger Anschlagabschnitt 23 des Stellhebels 24 ist vermittels einer sich gegen das Lagerteil 21 abstützenden Rückstellfeder 26 in seine Ausgangsstellung und gegen einen in den Figuren 3 bis 8 dargestellten Anschlag 37 gedrängt.

Wie aus Fig.3 hervorgeht, ist eine mittels einer vorgespannten Verzahnung 53 gegen Verdrehen gesicherte erstreckende Gewindespindel 27 koaxial zur Längsachse 25 drehfest und axial unverschieblich im Lagerteil 22 gehalten. Demgegenüber ist eine mit der Gewindespindel 27 verschraubte Stellmutter 31 am Lagerteil 21 drehbar gehalten. Die Stellmutter 31 ist über eine mit einer Schlingfeder 28 ausgestattete Einwegdrehkupplung oder einen Schlingfederfreilauf 29 mit dem Lagerteil 21 koppelbar. Andererseits wird die Stellmutter 31 über den Hülsenfreilauf 38 durch den Stellhebel 24 in Verlängerungsrichtung des Druckstangenstellers 16 angetrieben. Der Prinzipaufbau und die Funktionsweise derartiger Verschleißnachsteller mit zwei Einwegdrehkupplungen bzw. Freiläufen sind allgemein bekannt und brauchen daher nicht in allen Einzelheiten beschrieben zu werden. Es können jedoch auch andere Bauarten von Verschleißnachstellern verwendet werden, beispielsweise Zugstangensteller, wesentlich ist lediglich, dass er ein dem Stellhebel 24 entsprechendes Stellelement aufweist.

In der dargestellten Ausführung gemäß Fig.3 ist die Gewindespindel 27 drehfest und die Stellmutter 31 dagegen drehbar im Stellergehäuse 21, 22 gelagert. Die Schlingfeder 28 stützt das bei Axialkraft entstehende Drehmoment von der Stellmutter 31 direkt am Stellergehäuse bzw. am Lagerteil 21 ab. Über den Stellhebel 24 mit Hülsenfreilauf 38 kann die Rohrmutter 31 in den Druckstangensteller zum Verschleißnachstellen verlängernder Richtung gedreht werden. Jedoch ist auch eine Ausführung, z.B. gemäß EP 0 732 247 A2 denkbar, bei welcher die Gewindespindel 27 vom Stellhebel 24 drehbar angetrieben und die Stellmutter 31 drehfest gelagert ist.

Zwischen den beiden Wangen 4 und 5 des Zangenhebels 6 verläuft eine Steuerstange 32, deren gerundetes, rückwärtiges Ende in einer Lagerpfanne am freien Ende des Stellhebels 24 anliegt. Die Steuerstange 32 ist somit über eine Koppelstelle 33 mit dem Betätigungshebel 24 gekoppelt, in Fig.2 ist der Betätigungshebel 24 jedoch nicht eingezeichnet. In ihrem mittleren Bereich ist die Steuerstange 32 zum Vermeiden von Kollisionen mit anderen Bauteilen, insbesondere dem Bremskraftmotor 14, zur Bremszangenaußenseite hin ausgekröpft. Das vordere, ebenfalls gerundete Ende der Steuerstange 32 liegt in einer hier nicht sichtbaren Lagerpfanne eines Drehhebels 35 auf, wie es aus der Fig.2 ersichtlich ist. Der zweiarmige Drehhebel 35 ist in seinem mittleren Bereich in einer Anlenkstelle 36 drehbar gelagert und weist einen freien Schenkel 35a auf. Die Funktionsweise des Drehhebels 35 im Zusammenhang mit angrenzenden Bauelementen ist in EP 0 732 247 A2 ausführlich erläutert.

Das freie Ende 35a des Drehhebels 35 steht zur Bildung einer Tothubeinrichtung 44, wie aus Fig.2 ersichtlich, bremsscheibenseitig mit einem Abstand s einem Hebelteil 45 gegenüber. Das Hebelteil 45 ist als eine Verlängerung des Dreharmes 12 ausgebildet. Der Abstand s entspricht dem Weg, den, ausgehend von mit korrektem Lösehub gelöster Scheibenbremse, das Ende des Hebelteiles 45 beim noch zuspannungskraftfreien Anlegen der beiden Bremsbacken 15 an die Bremsscheibe 1 zurücklegt. Beim Bremsenanlegen schlägt das Hebelteil 45 gerade an den Schenkel 35a des Drehhebels 35 an.

Bei einem Bremsen-Anlegevorgang, ausgehend von einem z.B. durch Bremsbackenverschleiß zu großen Lösehub der Scheibenbremse, nimmt ab Beginn eines Überwindens des Löse-Überhubes das Hebelteil 45 bei seiner weiteren Bewegung bis zum Erreichen des Anlegens der Bremse den Schenkel 35a unter Drehen des Drehhebels 35 mit, wobei die Steuerstange 32 in Richtung zum Stellhebel 24 verschoben wird und hierbei den Druckstangennachsteller 16 betätigt. Das bremsscheibenseitige, vordere Ende der Steuerstange 32 ist somit über eine den Drehhebel 35 mitumfassende Koppelstelle 46 an das Kraftabgabeorgan 13 des Bremskraftmotors 14 ankoppelbar.

In Abänderung zum beschriebenen Ausführungsbeispiel können an der Bremszange die Zangenhebel mittig an einem Zugstangensteller 16 angelenkt sein, welcher durch einen Stellhebel 24 in Verkürzungsrichtung des Zugstangenstellers betätigbar ist. Der Verschleißnachsteller 16 kann beliebiger Bauart sein, er muss lediglich - wie bereits erwähnt - einen Stellhebel aufweisen. Die Halterung der Bremszange an einem raumfesten Teil, letztlich einem Fahrzeug- oder Drehgestellrahmen, kann an anderer Koppelstelle als der Koppelstelle 10 erfolgen, die Bauform einer Brernszangeneinheit kann evtl. mit dem Bremsengehäuse entfallen. Auch das Zuspannen der Bremszange 7 kann andersartig, in einer der vielen, bekannten Arten, erfolgen, beispielsweise vermittels eines direkt oder über ein Hebelgetriebe mit den Zangenhebeln 6, 8 gekoppelten Bremszylinders.

Die Länge des Druckstangenstellers ist daher abhängig vom Hub des Bremskraftmotors über einen Steuermechanismus einstellbar, welcher mit einer Steuerstange 32 auf den Stellhebel 24 des Druckstangenstellers 16 wirkt. Wie insbesondere aus Fig.3 bis Fig.8 hervorgeht, ist der Stellhebel 24 mit einem Hülsenfreilauf 38 in dem Stellergehäuse bzw. Lagerteil 21 des Druckstangenstellers 16 gelagert und in einer nachstellungsfreien Ausgangsstellung mit dem zapfenartigen Anschlagabschnitt 23 gegen einen Anschlag 37 des Lagerteils 21 bzw. einen Deckel 21a des Lagerteils 21 durch die Rückstellfeder 26 belastet. Diese Situation ist insbesondere in Fig.4 gezeigt, in welcher sich der Stellhebel 24 in seiner federbelastete Ausgangsstellung befindet.

Der Anschlag 37 für das sich in seiner Ausgangsstellung befindliche Stellelement 24 beinhaltet wenigstens ein in Anschlagrichtung elastisches Element 39, vorzugsweise eine Druckfeder. Die Druckfeder 39 ist vorgespannt, wobei ihre Vorspannkraft größer als die Kraft der den Stellhebel 24 gegen den Anschlag 37 belastenden Rückstellfeder 26 ist. Im Lagerteil 21 bzw. in dessen Deckel 21 a ist die Druckfeder 39 so positioniert, dass der Stellhebel 24 auf ihr zur Anlage kommt, wenn er durch die Kraft der Rückstellfeder 26 in seine Ausgangsposition gedreht wird. Da die Vorspannkraft der vorgespannten Druckfeder 39 größer als die Kraft der Rückstellfeder 26 ist, wird eine definierte Ausgangsposition des Stellhebels 24 gewährleistet.

Insbesondere ist die Druckfeder 39 in einer beispielsweise zylindrischen Ausnehmung 40 des Lagerteils 21 bzw. dessen Deckels 21 a des Druckstangenstellers 16 aufgenommen und dort mit beiden Enden vorgespannt abgestützt, wobei die Druckfeder 39 den Stellhebel 24 über ein Druckstück 41 kontaktiert, welches in der Ausnehmung 40 in Anschlagrichtung verschieblich gelagert ist, wie am besten Fig.4 und Fig.6 zeigen. Das Druckstück 41 wird beispielsweise durch einen in eine radial innere Ringnut der Ausnehmung 40 im Deckel 21a eingesetzten Sprengring 42 am Austritt aus der Ausnehmung 40 gehindert bzw. hierdurch die Vorspannung der Druckfeder 39 erzeugt. Genauer spannt das Druckstück 41 durch die unter Vorspannung stehende Druckfeder 39 axial gegen einen in der Ausnehmung 40 ausgebildeten Anschlag, welcher hier durch den Sprengring 42 gebildet wird. Anhand von Fig.4 ist leicht vorstellbar, dass aufgrund des Deckels 21a die Druckfeder 39, das Druckstück 41 sowie die Rückstellfeder 26 einfach zu montieren sind.

Die Rückstellfeder 26, hier bevorzugt eine Kegelfeder hält daher den Stellhebel 24 in seiner Ausgangsposition. Der Stellhebel 24 liegt dabei an dem Druckstück 41 an, welches in der beispielsweise als Sacklochbohrung ausgestalteten Ausnehmung 40 im Lagerteil 21 verschieblich gelagert ist und der gegen die vorgespannte Druckfeder 39 verschoben werden kann.

Wie aus Fig.4, 5 und 7 hervorgeht ist zusätzlich zu dem der Ausgangsstellung des Stellhebels 24 zugeordneten und mit der Druckfeder 39 Anschlag 37 ein weiterer Anschlag 43 im Lagerteil 21 bzw. dessen Deckel 21a vorgesehen, gegen welchen der Stellhebel 24 gegen die Wirkung der Rückstellfeder 26 mit einem weiteren zapfenförmigen Anschlagabschnitt 49 anschlägt, wenn der Druckstangensteller 16 einen maximalen Nachstellweg nachstellt. Diese Situation ist in Fig.7 gezeigt.

Bei großer elastischer Verformung der Schlingfeder 28 des Schlingfederfreilaufs 29 wird die Druckfeder 39 überdrückt, wie Fig.5 und Fig.6 zeigen. Das auf den Stellhebel 24 und damit auf den Hülsenfreilauf 38 wirkende Moment wird dann begrenzt auf das Moment bzw. die Kraft, welche durch die Druckfeder 39 in den Hülsenfreilauf 38 eingeleitet wird. Das Druckstück 41 wird dann bei elastischer Verformung der Druckfeder 39 wie in Fig.6 gezeigt, um ein Stück in die Ausnehmung bzw. Sacklochbohrung 40 hinein verschoben und hebt vom Sprengring 42 ab, der sonst in der Ausgangsstellung den axialen Anschlag für das Druckstück 42 bildet.

Lässt daher der Schlingfederfreilauf 29 wegen elastischer Dehnung unter Last eine gewisse Verdrehung der Rohrmutter 31 in verkürzender Richtung zu, so kann der Stellhebel 24 dieser Drehung gegen die Kraft der Druckfeder folgen, das Druckstück 41 verschiebt sich dabei linear (siehe Fig. 6). Der Hülsenfreilauf 38 wird dabei nur mit dem Moment belastet, welches aus der Federkraft der Druckfeder 39 und dem Abstand ihrer Wirkungslinie von der Drehachse der Stellmutter 31 resultiert, welche koaxial mit der Längsachse 25 ist.

Gemäß einer weiteren, in Fig.8 gezeigten Ausführungsform sind die Druckfeder 39 und das Druckstück 41 im Inneren einer Hohlschraube 51 gehalten, welche von außen her in eine als Gewindebohrung ausgebildete Durchgangsbohrung 52 des Lagerteils 21 eingeschraubt ist. Dann kann ein solcher elastischer Anschlag 37 auf einfache Weise in einem bereits bestehenden Druckstangennachsteller 16 nachgerüstet werden. Ansonsten ist der Aufbau und die Funktionsweise des elastischen Anschlags 37 wie beim vorangehenden Ausführungsbeispiel beschrieben. Nicht zuletzt erspart die Ausführungsform nach Fig.8 den Deckel 21a der Ausführungsform gemäß Fig.4 bis Fig.6.

Gemäß einem weiteren, hier nicht dargestellten Ausführungsbeispiel kann das elastische Element anstatt als Druckfeder 39 als beliebiges elastisches Element ausgeführt sein. Insbesondere ist eine Ausführung als Kegelfeder, als mit dem Stellergehäuse oder Lagerteil 21 vulkanisierter oder separat angeordneter bzw. gelagerter Elastomer denkbar.

Nicht zuletzt ist auch eine Ausführung des elastischen Elements als mit dem Lagerteil 21 einstückiger Abschnitt denkbar, welcher aufgrund einer besonderen geometrischen Ausgestaltung eine höhere Elastizität aufweist als die an ihn angrenzenden Bereiche des Lagerteils 21. In diesem Fall rührt daher die höhere Nachgiebigkeit bzw. Elastizität nicht aus einer geringeren Materialsteifigkeit sondern aus einer geometrisch bedingt geringeren Steifigkeit des Anschlags 37 verglichen mit den angrenzenden Bereichen des Lagerteils 21 her.

### Bezugszeichenliste

- 1: Bremsscheibe
- 2: Bremsengehäuse
- 6: Zangenhebel
- 7: Bremszange
- 8: Zangenhebel
- 9: Bolzen
- 10: Koppelstelle
- 11: Bolzenfortsatz
- 12: Dreharm
- 13: Kraftabgabeorgan
- 14: Bremskraftmotor
- 15: Bremsbacke
- 16: Druckstangensteller
- 17: Koppelstelle
- 18: Koppelstelle
- 19: Koppelstelle
- 20: Koppelstelle
- 21: Lagerteil
- 21a: Deckel
- 22: Lagerteil
- 23: Anlageabschnitt
- 24: Stellhebel
- 25: Längsachse
- 26: Rückstellfeder
- 27: Gewindespindel
- 28: Einwegdrehkupplung
- 29: Einwegdrehkupplung
- 31: Stellmutter
- 32: Steuerstange
- 33: Koppelstelle
- 35: Drehhebel
- 35a: Ende
- 36: Anlenkstelle
- 37: Anschlag
- 38: Hülsenfreilauf
- 39: Druckfeder
- 40: Ausnehmung
- 41: Druckstück
- 42: Sprengring
- 43: Anschlag
- 44: Tothubeinrichtung
- 45: Hebelteil
- 46: Koppelstelle
- 49: Anlageabschnitt
- 51: Hohlschraube
- 52: Durchgangsbohrung
- 53: Verzahnung
- 100: Scheibenbremse

## Patentansprüche

1. Scheibenbremse (100) eines Schienenfahrzeugs, mit einer Bremszange (7), deren Zangenhebel (6, 8) an ihren einen Enden mit Bremsbacken (15) und anderendseitig mit einem Verschleißnachsteller (16) gekoppelt sind, wobei die Länge des Verschleißnachstellers (16) abhängig vom Hub eines Bremskraftmotors (14) über einen Steuermechanismus einstellbar ist, welcher mit einer Steuerstange (32) auf ein Stellelement (24) des Verschleißnachstellers (16) wirkt, wobei das Stellelement (24) mit einem Freilauf (38) in einem Gehäuse (21) des Verschleißnachstellers (16) gelagert und in einer nachstellungsfreien Ausgangsstellung mit einem Anschlagabschnitt (23) gegen einen Anschlag (37) des Gehäuses (21) durch wenigstens ein Rückstellfederelement (26) belastet ist, **dadurch gekennzeichnet, dass** der Anschlag (37) wenigstens ein in Anschlagrichtung elastisches Element (39) beinhaltet.

2. Scheibenbremse nach Anspruch 1, **dadurch gekennzeichnet, dass** das wenigstens eine elastische Element (39) vorgespannt ist, wobei die Vorspannkraft des elastischen Elements (39) größer als die Kraft des wenigstens einen, das Stellelement (24) gegen den Anschlag (37) belastenden Rückstellfederelements (26) ist.

3. Scheibenbremse nach Anspruch 2, **dadurch gekennzeichnet, dass** das wenigstens eine elastische Element (39) elastisch verformt wird, wenn die durch das Stellelement (24) auf dieses wirkende Kraft größer als eine vorgegebene Grenzkraft ist und dass andernfalls im wesentlichen keine elastische Verformung des elastischen Elements (39) stattfindet.

4. Scheibenbremse nach Anspruch 2 oder 3, **dadurch gekennzeichnet, dass** das elastische Element (39) durch wenigstens eine vorgespannte Druckfeder gebildet wird.

5. Scheibenbremse nach Anspruch 4, **dadurch gekennzeichnet, dass** die wenigstens eine Druckfeder (39) in einer Ausnehmung (40) des Gehäuses (21) des Verschleißnachstellers (16) aufgenommen und dort mit beiden Enden vorgespannt abgestützt ist, wobei die wenigstens eine Druckfeder (39) das Stellelement (24) über ein Druckstück (41) kontaktiert, welches in der Ausnehmung (40) verschieblich gelagert ist.

6. Scheibenbremse nach einem der vorhergehenden Ansprüche, **dadurch gekennzeichnet, dass** das wenigstens eine elastische Element (39) im Inneren einer Hohlschraube (51) gehalten ist, welche von außen her in eine Durchgangsbohrung (52) des Gehäuses (21) eingeschraubt ist.

7. Scheibenbremse nach einem der vorhergehenden Ansprüche, **dadurch gekennzeichnet, dass** das Stellelement (24) die nachstellungsfreie Ausgangsstellung bei einer Lösestellung der Bremse oder bei einer Zuspannstellung der Bremse einnimmt, wenn kein Nachstellungsbedarf durch den Verschleißnachsteller (16) vorliegt.

8. Scheibenbremse nach einem der vorhergehenden Ansprüche, **dadurch gekennzeichnet, dass** das Rückstellfederelement (26) wenigstens eine Druckfeder beinhaltet.

9. Scheibenbremse nach Anspruch 8, **dadurch gekennzeichnet, dass** die wenigstens eine Druckfeder (26) durch eine Kegelfeder gebildet wird.

10. Scheibenbremse nach einem der vorhergehenden Ansprüche, **dadurch gekennzeichnet, dass** an dem Gehäuse (21) ein weiterer Anschlag (43) für das Stellelement (24) ausgebildet ist, gegen welchen das Stellelement (24) mit einem weiteren Anschlagabschnitt (49) anschlägt, wenn der Verschleißnachsteller (16) einen maximalen Nachstellweg nachstellt.

## Claims

1. A disk brake (100) of a rail vehicle, having a brake caliper (7), the caliper levers (6, 8) of which are coupled at their one end to brake shoes (15) and at their other end to a wear adjuster (16), wherein the length of the wear adjuster (16) can be set by means of a control mechanism as a function of the stroke of a braking force motor (14), which control mechanism acts with a control rod (32) on an actuator element (24) of the wear adjuster (16), wherein the actuator element (24) is mounted with a freewheeling mechanism (38) in a housing (21) of the wear adjuster (16) and, in an adjustment-free home position, is loaded with a stop section (23) against a stop (37) of the housing (21) by at least one restoring spring element (26), **characterized in that** the stop (37) includes at least one element (39) which is elastic in the stop direction.

2. The disk brake as claimed in claim 1, **characterized in that** the at least one elastic element (39) is prestressed, wherein the prestressing force of the elastic element (39) is greater than the force of the at least one restoring spring element (26) which loads the actuator element (24) against the stop (37).

3. The disk brake as claimed in claim 2, **characterized in that** the at least one elastic element (39) is elastically deformed if the force acting on said elastic element (39) by means of the actuator element (24) is greater than a predefined limiting force, and **in that** otherwise substantially no elastic deformation of the elastic element (39) takes place.

4. The disk brake as claimed in claim 2 or 3, **characterized in that** the elastic element (39) is formed by at least one prestressed compression spring.

5. The disk brake as claimed in claim 4, **characterized in that** the at least one compression spring (39) is accommodated in a recess (40) in the housing (21) of the wear adjuster (16) and is supported there by both ends in a prestressed fashion, wherein the at least one compression spring (39) makes contact with the actuator element (24) via a pressure piece (41) which is displaceably mounted in the recess (40).

6. The disk brake as claimed in one of the preceding claims, **characterized in that** the at least one elastic element (39) is held in the interior of a hollow screw (51) which is screwed into a drilled through-hole (52) in the housing (21) from the outside.

7. The disk brake as claimed in one of the preceding claims, **characterized in that** the actuator element (24) assumes the adjustment-free home position in the case of a release position of the brake or in the case of a brake application position of the brake if there is no requirement for adjustment by the wear adjuster (16).

8. The disk brake as claimed in one of the preceding claims, **characterized in that** the restoring spring element (26) contains at least one compression spring.

9. The disk brake as claimed in claim 8, **characterized in that** the at least one compression spring (26) is formed by a conical spring.

10. The disk brake as claimed in one of the preceding claims, **characterized in that** a further stop (43) for the actuator element (24) is formed on the housing (21), against which stop (43) the actuator element (24) abuts with a further stop section (49) if the wear adjuster (16) adjusts by a maximum adjustment travel.

## Revendications

1. Frein (100) à disque d'un véhicule ferroviaire, comprenant un étrier (7) de frein, dont les leviers (6, 8) sont couplés à l'une de leurs extrémités à des mâchoires (15) de frein et de l'autre côté à un dispositif (16) de rattrapage d'usure, la longueur du dispositif (16) de rattrapage d'usure étant, en fonction de la course d'un moteur (14) de force de freinage, réglable par un mécanisme de commande, qui agit par une barre (32) de commande sur un élément (24) de réglage du dispositif (16) de rattrapage d'usure, l'élément (24) de réglage étant monté par une roue libre (38) dans un boîtier (21) du dispositif (16) de rattrapage d'usure et étant, dans une position de départ sans rattrapage, appliqué par une partie (23) de butée par au moins un élément (26) de ressort de rappel sur une butée (37) du boîtier (21), **caractérisé en ce que** la butée (37) comporte au moins un élément (39) élastique dans la direction de butée.

2. Frein à disque suivant la revendication 1, **caractérisé en ce que** le au moins un élément (39) élastique est précontraint, la force précontrainte de l'élément (39) élastique étant plus grande que la force du au moins un élément (26) de ressort de rappel, appliquant l'élément (24) de réglage sur la butée (37) .

3. Frein à disque suivant la revendication 2, **caractérisé en ce que** le au moins un élément (39) élastique est déformé élastiquement, lorsque la force agissant sur celui-ci par l'élément (24) de réglage est plus grande qu'une force limite donnée à l'avance et **en ce que** sinon il n'y a sensiblement pas de déformation élastique de l'élément (39) élastique.

4. Frein à disque suivant la revendication 2 ou 3, **caractérisé en ce que** l'élément (39) élastique est formé par au moins un ressort de compression précontraint.

5. Frein à disque suivant la revendication 4, **caractérisé en ce que** le au moins un ressort (39) de compression est logé dans un évidement (40) du boîtier (21) du dispositif (16) de rattrapage d'usure et y est appuyé en étant précontraint par les deux extrémités, le au moins un ressort (39) de compression entrant en contact avec l'élément (24) de réglage par une pièce (41) d'application d'une pression, qui est montée coulissante dans l'évidement (40).

6. Frein à disque suivant l'une des revendications précédentes, **caractérisé en ce que** le au moins un élément (39) élastique est maintenu à l'intérieur d'une vis (51) creuse, qui est vissée de l'extérieur dans un trou (52) traversant du boîtier (21).

7. Frein à disque suivant l'une des revendications précédentes, **caractérisé en ce que** l'élément (24) de réglage prend la position de départ sans rattrapage dans une position desserrée du frein ou dans une position de serrage du frein, s'il n'y a pas de besoin de rattrapage par le dispositif (16) de rattrapage d'usure.

8. Frein à disque suivant l'une des revendications précédentes, **caractérisé en ce que** l'élément (26) de ressort de rappel comporte au moins un ressort de compression.

9. Frein à disque suivant la revendication 8, **caractérisé en ce que** le au moins un ressort (26) de compression est formé par un ressort conique.

10. Frein à disque suivant l'une des revendications précédentes, **caractérisé en ce qu'**il est formé sur le boîtier (21) une autre butée (43) pour l'élément (24) de réglage, contre laquelle l'élément (24) de réglage bute par une autre partie (49) de butée, lorsque le dispositif (16) de rattrapage de l'usure rattrape un trajet de rattrapage maximum.
